# EUROPEAN PATENT APPLICATION

(11) **EP 4 362 161 A1**
(43) Date of publication of application: **01.05.2024**
(21) Application number: 22828659.7
(22) Date of filing: 15.06.2022
(51) Int. Cl.: H01M 10/0567, H01M 10/052

(54) **ELECTROLYTE FOR BATTERY AND SECONDARY BATTERY COMPRISING SAME**

(30) Priority: 23.06.2021 KR 20210081292
(71) Applicant: Soulbrain Co., Ltd., Seongnam-si, Gyeonggi-do 13486 (KR)
(72) Inventor: KANG, Wan Chul, Seongnam-si, Gyeonggi-do 13486 (KR); CHOI, Ji Young, Seongnam-si, Gyeonggi-do 13486 (KR); LIM, Young Rok, Seongnam-si, Gyeonggi-do 13486 (KR); CHUNG, Jae Won, Seongnam-si, Gyeonggi-do 13486 (KR)
(74) Representative: Dehns
(86) International application number: PCT/KR2022/008448
(87) International publication number: WO 2022/270812

(57) **Abstract**

The present invention relates to an electrolyte solution additive, an electrolyte solution for batteries, and a secondary battery including the same. According to the present invention, the present invention has an effect of providing a secondary battery having improved charging efficiency and output due to low discharge resistance and having a long lifespan and excellent high-temperature capacity retention rate by suppressing gas generation.

## Description

### [Technical Field]

The present invention relates to an electrolyte solution for batteries and a secondary battery including the same. More particularly, the present invention relates to an electrolyte solution for batteries including an electrolyte solution additive capable of improving battery output characteristics and high-temperature storage characteristics and significantly reducing gas generation and a secondary battery including the electrolyte solution.

### [Background Art]

In a lithium secondary battery, an electrolyte solution contained between a cathode and an anode enables smooth movement of lithium ions. In addition, due to the electrolyte solution, electric energy may be easily used according to the method in which electricity is generated or consumed by oxidation-reduction reaction according to insertion and desorption at the cathode and the anode.

Recently, environmental regulations have been strengthened worldwide, and interest in the environment has increased. Accordingly, interest in eco-friendly vehicles that can replace fossil fuel vehicles that cause air pollution is also increasing. Accordingly, domestic and foreign battery industries are actively developing automobile batteries.

To use batteries in automobiles and energy storage systems (ESSs) that require high capacity, the output and capacity of the batteries must be significantly increased. In addition, the output of the batteries should be improved at high and low temperatures according to various weather conditions, and the problem of resistance increase should be solved. Considering that automobiles are used outdoors regardless of the season, batteries with improved long-term charging and capacity retention rate in various environments are required.

### [Related Art Documents]

### [Patent Documents]

KR 1295395 B1

### [Disclosure]

### [Technical Problem]

Therefore, the present invention has been made in view of the above problems, and it is one object of the present invention to provide an electrolyte solution for batteries including an electrolyte solution additive capable of improving battery output characteristics and high-temperature storage characteristics and significantly reducing gas generation and a secondary battery including the electrolyte solution.

It is another object of the present invention to provide an excellent secondary battery having improved battery output due to reduced discharge resistance, being capable of long-term storage due to improved recovery capacity at high temperatures, and being capable of suppressing gas generation in the battery.

The above and other objects can be accomplished by the present invention described below.

### [Technical Solution]

In accordance with one aspect of the present invention, provided are an electrolyte solution additive including a compound represented by Chemical Formula 1 below and an electrolyte solution for batteries including the electrolyte solution additive.

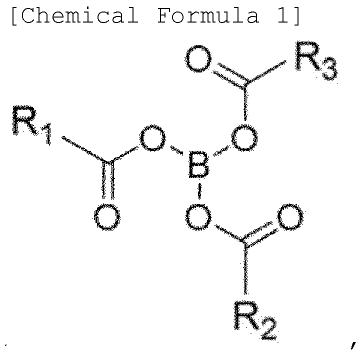

wherein R₁, R₂, and R₃ are each independently a straight-chain or branched alkyl group including a halogen substituent having 1 to 7 carbon atoms.

In the compound represented by Chemical Formula 1, the halogen substituent may be fluorine.

Based on 100 % by weight in total of the electrolyte solution, the compound represented by Chemical Formula 1 may be included in an amount of 0.1 to 10 % by weight.

Based on 100 % by weight in total of the electrolyte solution, the electrolyte solution further includes an organic sulfur compound in an amount of greater than 0 % by weight and 1.5 % by weight or less.

The organic sulfur compound may be a sulfate compound, a sultone compound, or a mixture thereof.

The sulfate compound may include one or more selected from ethylene sulfate and 1,3-propylene sulfate, and the sultone compound may include one or more selected from 1,3-propane sultone and 3-fluoro-1,3-propane sultone.

The mixture may include the sulfate compound and the sultone compound in a weight ratio of 1:0.5 to 1.5 (sulfate compound:sultone compound).

Based on 100 % by weight in total of the electrolyte solution, the organic sulfur compound for batteries may further include one or more selected from the group consisting of vinylene carbonate (VC), fluoroethylene carbonate (FEC), and difluoroethylene carbonate in an amount of 0.3 to 10 % by weight.

The electrolyte solution may include one or more organic solvents selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

The electrolyte solution may include one or more lithium salts selected from the group consisting of LiPF₆, LiBF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, and (CF₃SO₂)₂NLi.

In accordance with another aspect of the present invention, provided is a lithium secondary battery including:
an anode, a cathode, a separator disposed between the anode and the cathode, and an electrolyte solution, wherein the electrolyte solution is the above-described electrolyte solution.

The lithium secondary battery may have a discharge resistance value of 42.1 mQ or less as measured at 60 °C.

The lithium secondary battery may have a recovery capacity retention rate of 96.9 % or more as measured at 60 °C and calculated by Equation 2 below. Recovery capacity retention rate (%) = {(Recovery capacity after storage at high temperature - Initial recovery capacity) / Initial recovery capacity} × 100

The lithium secondary battery may have a thickness increase rate of 5.9 % or less as measured at 60 °C and calculated by Equation 3 below. Thickness increase rate (%) = {(Thickness after storage at high temperature - Initial thickness) / Initial thickness} × 100

The lithium secondary battery may be a battery for energy storage systems (ESSs) and automobiles.

### [Advantageous Effects]

When an electrolyte solution for batteries according to the present invention is included in a secondary battery, the secondary battery can have improved output due to reduced discharge resistance and have a long lifespan and excellent high-temperature capacity retention rate due to improved recovery capacity at high temperatures.

In particular, the additive for batteries according to the present invention can suppress gas generation in a battery, thereby providing a secondary battery having excellent performance and lifespan characteristics.

### [Description of Drawings]

FIG. 1 is a graph showing the energy capacity (%) of Examples 1 to 4 and Comparative Examples 1 to 3 to be described later.
FIG. 2 is a graph showing the energy capacity (%) of Examples 5 to 8 and Reference Example 1 to be described later.

### [Best Mode]

Hereinafter, an electrolyte solution additive, an electrolyte solution for batteries, and a secondary battery including the electrolyte solution according to the present invention will be described in detail.

The present inventors have studied to develop a secondary battery for automobiles having high output and excellent high-temperature recovery capacity and lifespan characteristics. During the above research, the present inventors confirmed that all of the above objects could be achieved when additives having a specific structure were added to the electrolyte solution of a secondary battery. Based on these results, the present inventors conducted further studies to complete the present invention.

The electrolyte solution additive of the present invention includes a compound represented by Chemical Formula 1 below.

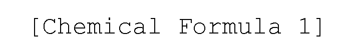

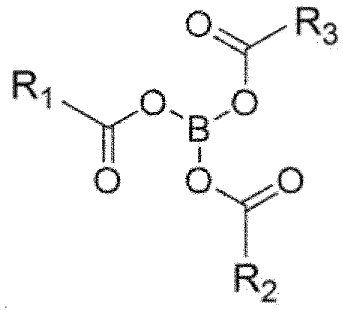

In Chemical Formula 1, R₁, R₂, and R₃ are each independently a straight-chain or branched alkyl group including a halogen substituent having 1 to 7 carbon atoms.

In addition, the electrolyte solution for batteries of the present invention includes the electrolyte solution additive.

When the electrolyte solution additive including the compound represented by Chemical Formula 1 is added to the electrolyte solution of a secondary battery, due to the electronegativity difference between the B element and the O element directly connected thereto, electrons are localized toward the O element. Accordingly, the B element becomes electron-poor (e- poor, δ+) state, and oxidation reaction is induced in the electrolyte solution containing lithium ions, thereby forming a stable film on an electrode, as a specific example, a cathode. At the same time, ion conductivity is improved due to the terminally substituted halogen substituent.

At this time, the stability of the film may prevent decomposition of the electrolyte solution, thereby improving cycle characteristics. In particular, compared to conventional electrode films that decompose at high temperatures and have poor high-temperature storage properties, since the film according to the present invention do not decompose at high temperatures, high-temperature storage properties may be greatly improved. In addition, charging efficiency and output may be improved by preventing an increase in resistance. In addition, since gas generation due to chemical reactions inside a battery is also suppressed, the safety of the battery may be improved.

Specifically, gas generation inside a battery is mainly due to decomposition of electrolyte solution components, especially carbonate-based solvents, on the surface of cathode/anode. A cathode/anode protective film may be easily degraded by the generated gas, and gas generation is further promoted due to oxygen radicals generated from the cathode. The material of the present invention may suppress direct decomposition of a solvent by forming a protective film composed of components such as B, O, and F and having excellent stability. In addition, the material of the present invention may prevent elution of transition metal ions from the cathode due to cathode deterioration due to the metal ion coordination effect of the B-O group, thereby ultimately preventing escape of the oxygen elements constituting the skeleton of the cathode.

In addition, capacity retention rate may be improved by preventing structural collapse of the electrode active materials of a cathode and anode at high temperatures, thereby increasing the lifespan of a battery.

R₁, R₂, and R₃ are each independently a straight-chain or branched alkyl group including a halogen substituent having 1 to 7 carbon atoms. Preferably, R₁, R₂, and R₃ are each independently a straight-chain alkyl group including a halogen substituent having 1 to 5 carbon atoms. More preferably, R₁, R₂, and R₃ are each independently an alkyl group including a halogen substituent having 2 or less carbon atoms.

For example, the halogen substituent included in the compound represented by Chemical Formula 1 may be fluorine or iodine, preferably fluorine. Fluorine is the element having the highest electronegativity (3.98). When the halogen substituent is fluorine, the polarity of the compound represented by Chemical Formula 1 increases. Accordingly, the ion mobility of the electrolyte solution including the compound represented by Chemical Formula 1 and the organic solvent may be improved. By forming a hydrogen bond with an electrode active material on an electrode surface, the compound may prevent side reactions of the electrode active material that may occur during charging and discharging of a battery, thereby maximizing the effect of improving the stability and charge/discharge efficiency of the battery.

More preferably, R₁, R₂, and R₃ are each independently a trifluoromethyl group or a difluoromethyl group. When R₁, R₂, and R₃ are all trifluoromethyl groups or all difluoromethyl groups, the compound becomes chemically stable and inert and the molecular structure thereof is simplified. Accordingly, in terms of stability, the above case is most preferable.

The compound represented by Chemical Formula 1 may preferably be a compound represented by Chemical Formula 2 or 3 below.

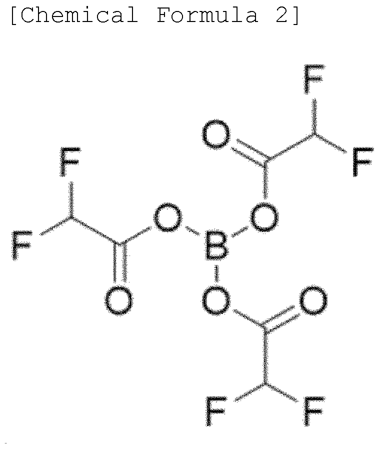

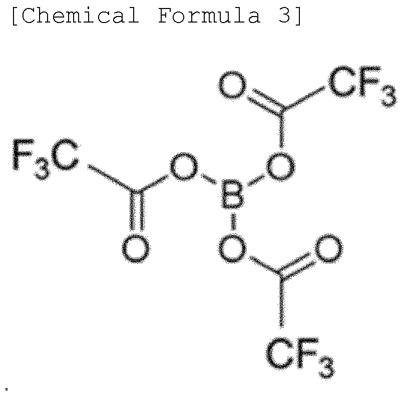

When the electrolyte solution additive includes the compound represented by Chemical Formula 2 or 3, the above configuration is preferable in terms of molecular structure stabilization, chemical stability, ion mobility of the electrolyte solution, and prevention of side reactions of an electrode active material. In addition, since the charge resistance of a secondary battery including the additive is reduced, the output of the battery may be improved, charge recovery capacity at high temperatures may be increased, and lifespan efficiency may be increased. Thus, the additive is preferably used as an electrolyte solution additive for batteries.

For example, based on 100 % by weight in total of the electrolyte solution for batteries, the compound represented by Chemical Formula 1 may be included in an amount of 0.01 to 10.0 % by weight, preferably 0.1 to 5.0 % by weight, more preferably 0.1 to 2.0 % by weight, still more preferably 0.1 to 1.5 % by weight, most preferably 0.1 to 1.2 % by weight. When the content of the electrolyte solution additive satisfies the range, the charging efficiency and high-temperature lifespan of a battery may be improved.

In addition to the electrolyte solution additive represented by Chemical Formula 1, the electrolyte solution for batteries of the present invention includes an organic sulfur compound as an electrolyte solution additive for the purpose of improving battery lifespan characteristics, preventing battery capacity reduction, and improving battery discharge capacity.

For example, the organic sulfur compound includes a sulfate compound and/or a sultone compound.

For example, the sulfate compound may include ethylene sulfate, 1,3-propylene sulfate, and the like.

For example, the sultone compound may include 1,3-propane sultone, 3-fluoro-1,3-propane sultone, and the like.

Preferably, as the organic sulfur compound, one or more selected from the sulfate compounds and one or more selected from the sultone compounds may be used in combination. In this case, discharge resistance may be reduced and gas generation may be suppressed, thereby improving lifespan. The discharge resistance is directly related to output performance corresponding to vehicle driving performance.

For example, the organic sulfur compound may be included in the electrolyte solution for batteries in an amount of 1.5 % by weight or less, preferably 0.3 to 1.5 % by weight, more preferably 0.7 to 1.2 % by weight. When the content of the sulfate compound satisfies the range, the low-temperature characteristics and cycle characteristics of a battery may be significantly improved.

When the sulfate compound and the sultone compound are used in combination as the organic sulfur compound, the sulfate compound and the sultone compound may be included in the electrolyte solution for batteries in a weight ratio of 1:0.5 to 1.5 (sulfate compound:sultone compound) or a weight ratio of 1:0.8 to 1.2 (sulfate compound:sultone compound). Within this range, discharge resistance may be effectively reduced, and lifespan may be improved.

In addition to the electrolyte solution additive, to improve the performance of a lithium secondary battery, a lithium ion capacitor, or the like, additives such as vinylene carbonate (VC), fluoroethylene carbonate (FEC), and difluoroethylene carbonate may be further included in an amount of 0.3 to 10 % by weight, preferably 0.7 to 5 % by weight, more preferably 1 to 4 % by weight, still more preferably 2 to 4 % by weight.

For example, the organic solvent included in the electrolyte solution for batteries may be a carbonate-based organic solvent, specifically, an organic solvent including one or more selected from the group consisting of ethylene carbonate (EC), diethyl carbonate (DEC), ethyl methyl carbonate (EMC), dimethyl carbonate (DMC), propylene carbonate (PC), dipropyl carbonate (DPC), butylene carbonate, methyl propyl carbonate, and ethyl propyl carbonate.

For example, the organic solvent may be a mixed solvent consisting of one or more solvents. Preferably, the organic solvent may be a mixed solvent obtained by mixing a high-dielectric-constant organic solvent with high ion conductivity for increasing battery charge/discharge performance and a low-viscosity organic solvent capable of adjusting the viscosity of a solvent to an appropriate viscosity for application to batteries.

For example, EC and/or PC may be used as the high-dielectric-constant organic solvent, and EMC, DMC, and/or DEC may be used as the low-viscosity organic solvent. The high-dielectric-constant organic solvent and the low-viscosity organic solvent are preferably mixed in a volume ratio of 2:8 to 8:2 and used. More specifically, a ternary mixed solvent consisting of EC or PC; EMC; and DMC or DEC may be used. At this time, EC or PC; EMC; and DMC or DEC may be mixed in a volume ratio of 2:3 to 5:2 to 4 (EC or PC:EMC:DMC or DEC).

For example, the organic solvent may be used in the remaining amount after subtracting the content of components other than the organic solvent in the electrolyte solution.

When the organic solvent contains moisture, lithium ions in the electrolyte solution may be hydrolyzed. Accordingly, the amount of moisture in the organic solvent is preferably adjusted to 150 ppm or less, more preferably 100 ppm or less.

Compounds capable of providing lithium ions used in a lithium secondary battery may be used as the lithium salts included in the electrolyte solution for batteries without particular limitation. For example, the lithium salts may include one or more selected from the group consisting of LiPF₆, LiBF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, and (CF₃SO₂)₂NLi, preferably LiPF₆.

When the lithium salt is dissolved in the electrolyte solution, the lithium salt functions as a source of lithium ions in the lithium secondary battery to promote movement of lithium ions between the cathode and the anode. Accordingly, the lithium salt is preferably included in the electrolyte solution at a concentration of approximately 0.6 to 2 M. When the concentration of the lithium salt is less than 0.6 M, the conductivity of the electrolyte may be reduced, resulting in deterioration of electrolyte performance. When the concentration of the lithium salt exceeds 2 M, the viscosity of the electrolyte may be increased, resulting in reduction in the mobility of lithium ions. Considering the conductivity of the electrolyte and the mobility of lithium ions, the lithium salt may be included in the electrolyte solution in an amount of preferably 0.7 M to 1.6 M, still more preferably 0.8 M to 1.5 M.

A secondary battery of the present invention includes an anode, a cathode, a separator disposed between the anode and cathode, and the electrolyte solution of the present invention.

For example, the cathode may be manufactured by preparing a composition for forming a cathode active material layer by mixing a cathode active material, a binder, and optionally a conductive material, and then applying the composition to a cathode current collector such as aluminum foil.

For example, as the cathode active material, a conventional NCM (lithium nickel manganese cobalt oxide, LiNiMnCoO₂) cathode active material used in lithium secondary batteries may be used. Preferably, a lithium complex metal oxide represented by the Chemical Formula of Li[NixCo_{1-x-y}Mn_{y}]O₂ (0<x<0.5, 0<y<0.5) may be used as the cathode active material, but the present invention is not limited thereto.

For example, in the Chemical Formula of Li[NixCo_{1-x-y}Mn_{y}]O₂ representing the lithium complex metal oxide, the variables x and y may satisfy 0.0001<x<0.5, 0.0001<y<0.5, or 0.001<x<0.3, 0.001<y<0.3.

As another example, as the cathode active material, a compound (lithiated intercalation compound) capable of reversible intercalation and deintercalation of lithium may be used.

Among the compounds, from the viewpoint of improving the capacity characteristics and stability of a battery, one or more selected from the group consisting of LiCoO₂, LiMnO₂, LiMn₂O₄, LiNiO₂, LiNiₓMn₍₁₋ₓ₎O₂ (0<x<1), and LiM1ₓM2_{y}O₂ (0≤x≤1, 0≤y≤1, 0≤x+y≤1, and M1 and M2 each independently includes any one selected from the group consisting of Al, Sr, Mg, and La) are preferably used.

For example, the anode may be prepared by preparing a composition for forming an anode active material layer by mixing an anode active material, a binder, and optionally a conductive agent, and then applying the composition to an anode current collector such as copper foil.

For example, as the anode active material, a compound capable of reversible intercalation and deintercalation of lithium may be used.

As a specific example, the anode active material may be a carbonaceous material such as artificial graphite, natural graphite, graphitized carbon fiber, or amorphous carbon. In addition to the carbonaceous material, a metallic compound capable of being alloyed with lithium or a composite containing a metallic compound and a carbonaceous material may be used as the anode active material. For example, graphite may be used.

In addition, silicon may be added to improve the performance of the carbonaceous material.

For example, the metal capable of being alloyed with lithium may include any one of Si, Al, Sn, Pb, Zn, Bi, In, Mg, Ga, Cd, Si alloy, Sn alloy, and Al alloy.

In addition, a metal lithium thin film may be used as the anode active material. As the anode active material, one or more selected from the group consisting of crystalline carbon, amorphous carbon, carbon composite, lithium metal, and alloy including lithium may be used in terms of high stability.

In the secondary battery according to one embodiment of the present invention, by adding the electrolyte solution additive represented by Chemical Formula 1 to improve battery performance, battery characteristics such as battery discharge resistance, output characteristics, capacity recovery characteristics at high temperatures of 60 °C or higher, and lifespan characteristics measured by hybrid pulse power characterization (HPPC) may be improved.

In the secondary battery according to another embodiment of the present invention, by adding a performance improver in addition to the electrolyte solution additive represented by Chemical Formula 1 added to the electrolyte solution, battery characteristics such as battery discharge resistance, output characteristics, capacity recovery characteristics at high temperatures of 60 °C or higher, and lifespan characteristics measured by hybrid pulse power characterization (HPPC) may be further improved.

Specifically, the secondary battery of the present invention may have an HPPC discharge resistance value of 42.1 mQ or less, preferably 38.6 to 42.1 mQ as measured at 60 °C.

In addition, the secondary battery may have an HPPC discharge resistance increase rate (DCIR increase rate) of 26.2 % or less, preferably 20.3 to 26.2 % as measured at 60 °C and calculated by Equation 1 below. DCIR incresase rate (%) = {(Discharge resistance after storage at high temperature - Initial resistance) / Initial resistance} × 100

In the present disclosure, the HPPC discharge resistance value may be measured by the method prescribed in the document "Battery test manual for plug-in hybrid electric vehicles (2010, Idaho National Laboratory for the U.S. Department of Energy.)", and is an important index representing battery output characteristics. In addition, discharge resistance is a resistance value measured during discharging of a battery. As the discharge resistance decreases, energy loss may be reduced, charging speed may be increased, and the output of a battery may be improved. Since the secondary battery of the present invention has a low HPPC discharge resistance value as described above, the secondary battery of the present invention has excellent charging speed and output, and thus is suitable for use as a battery for automobiles.

The secondary battery may have a recovery capacity of 774.8 mQ or more, preferably 774.8 to 790.0 mQ as measured at 60 °C.

The secondary battery may have a recovery capacity retention rate of 96.9 % or more, preferably 96.9 to 98.8 % as measured at 60 °C and calculated by Equation 2 below.

Recovery capacity retention rate (%) = {(Recovery capacity after storage at high temperature - Initial recovery capacity) / Initial recovery capacity} × 100

In the present disclosure, the recovery capacity represents the capacity conservation characteristics of a battery that has been left unattended for a long time. A discharged electric capacity when a battery left for a long time is discharged to a discharge end voltage and a discharged electric capacity when the discharged battery is recharged and discharged again to the discharge end voltage are measured. The two capacity values are compared. A high recovery capacity value means that the amount of natural discharge due to battery preservation (storage) is small, that is, a battery may be preserved for a long time. In particular, since the natural discharge rate increases as the storage temperature of a battery increases, recovery capacity at high temperatures is a very important characteristic in batteries for automobiles. When the electrolyte solution additive of the present invention is added to an electrolyte solution for batteries, recovery capacity may be improved. That is, long-term storage is possible with a single charge.

The thickness of the secondary battery may be 3.27 mm or less, preferably 3.13 to 3.23 mm as measured at 60 °C.

The secondary battery may have a thickness increase rate of 5.9 % or less, preferably 3.0 to 5.9 % as measured at 60 °C and calculated by Equation 3 below.

Thickness increase rate (%) = {(Thickness after storage at high temperature - Initial thickness) / Initial thickness} × 100

In the present disclosure, the thickness increase rate represents the swelling characteristics due to gas generation inside a battery, and may be obtained by measuring the initial thickness of a pouch cell and the thickness after leaving at a high temperature and comparing the difference between the two values. When a stable film is formed on the cathode and anode, decomposition of electrolyte components may be suppressed. Accordingly, when the thickness increase rate is reduced, stability according to repeated charging and discharging of a battery may be provided, and battery lifespan may be improved.

Therefore, when the battery of the present invention is used as an automotive battery, output, which depends on the size of an automobile, may be improved. In addition, considering climate change and the environment of an automobile exposed to sunlight while driving or parking, automobile performance at low and high temperatures and lifespan may be improved. That is, the battery of the present invention may exhibit excellent performance as an automotive battery.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples: Preparation of electrolyte solution for batteries]

### Example 1

LiPF₆ as a lithium salt was dissolved in a carbonate-based mixed solvent containing EC, EMC, and DMC in a volume ratio of 2:4:4 (EC:EMC:DMC) as an organic solvent at a concentration of 1.15 M, and 0.5 % by weight of a compound represented by Chemical Formula 2 below as an electrolyte solution additive was added thereto to prepare an electrolyte solution for batteries.

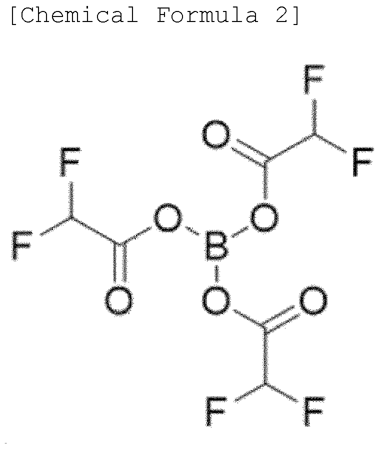

### Example 2

The same procedure as Example 1 was performed except that 1.0 % by weight of the compound represented by Chemical Formula 2 was added.

### Example 3

The same procedure as Example 1 was performed except that a compound represented by Chemical Formula 3 below was used instead of the compound represented by Chemical Formula 2.

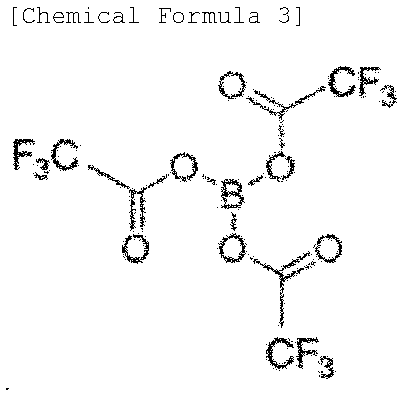

### Example 4

The same procedure as Example 2 was performed except that the compound represented by Chemical Formula 3 was used instead of the compound represented by Chemical Formula 2.

### Example 5

LiPF₆ as a lithium salt was dissolved in a carbonate-based mixed solvent containing EC, EMC, and MCC in a volume ratio of 2:4:4 (EC:EMC:MCC) as an organic solvent at a concentration of 1.15 M, and 0.2 % by weight of a compound represented by Chemical Formula 2 below as an electrolyte solution additive and 0.5 % by weight of ethylene sulfate, 0.5 % by weight of 1,3-propylene sultone, and 3 % by weight of fluoroethylene carbonate as organic sulfur compounds were added thereto to prepare an electrolyte solution for batteries.

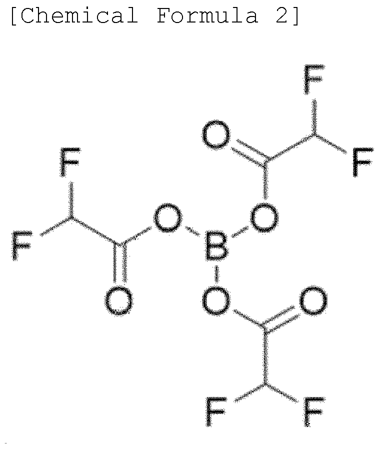

### Example 6

The same procedure as Example 5 was performed except that 0.5 % by weight of the compound represented by Chemical Formula 2 was used.

### Example 7

LiPF₆ as a lithium salt was dissolved in a carbonate-based mixed solvent containing EC, EMC, and MCC in a volume ratio of 2:4:4 (EC:EMC:MCC) as an organic solvent at a concentration of 1.15 M, and 0.2 % by weight of a compound represented by Chemical Formula 3 below as an electrolyte solution additive and 0.5 % by weight of ethylene sulfate, 0.5 % by weight of 1,3-propylene sultone, and 3 % by weight of fluoroethylene carbonate as organic sulfur compounds were added thereto to prepare an electrolyte solution for batteries.

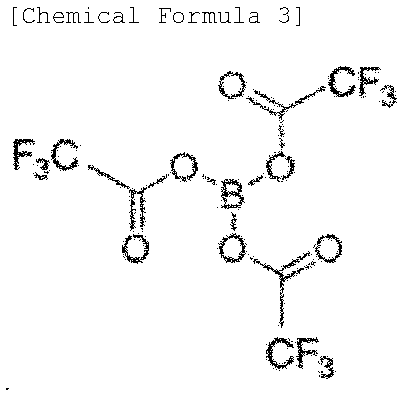

### Example 8

The same procedure as Example 7 was performed except that 0.5 % by weight of the compound represented by Chemical Formula 3 was used.

### Comparative Example 1

The same procedure as Example 1 was performed except that the compound represented by Chemical Formula 2 is not included.

### Comparative Example 2

The same procedure as Example 2 was performed except that a compound represented by Chemical Formula 4 below was used instead of the compound represented by Chemical Formula 2.

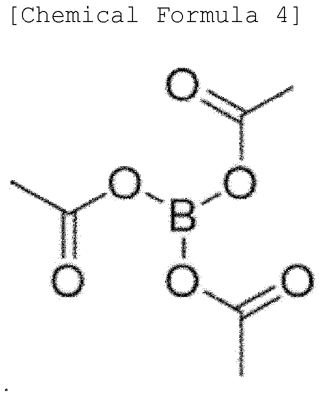

### Comparative Example 3

The same procedure as Example 2 was performed except that a compound represented by Chemical Formula 5 below was used instead of the compound represented by Chemical Formula 2.

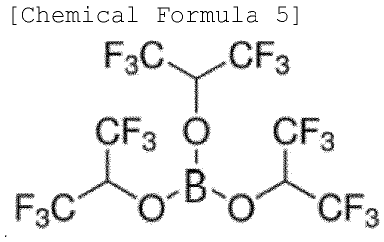

### Reference Example 1

The same procedure as Example 5 was performed except that 1-propene-1,3-sultone was used instead of the compound represented by Chemical Formula 2.

### Manufacture of battery

100 parts by weight of a cathode mixture containing 92 % by weight of Li (Ni_{0.8}Co_{0.1}Mn_{0.1})O₂ as a cathode active material, 4 % by weight of carbon black as a conductive material, and 4 % by weight of polyvinylidene fluoride (PVdF) as a binder was added to 100 parts by weight of N-methyl-2-pyrrolidone (NMP) as a solvent to prepare cathode mixture slurry. The cathode mixture slurry was applied onto an aluminum (Al) thin film having a thickness of about 20 µm as a cathode current collector, followed by drying. Then, the dried thin film was subjected to roll pressing to manufacture a cathode.

In addition, 100 parts by weight of an anode mixture containing 96 % by weight of carbon powder, as an anode active material, containing artificial graphite and natural graphite, 3 % by weight of PVdF as a binder, and 1 % by weight of carbon black as a conductive material was added to 100 parts by weight of NMP as a solvent to prepare anode mixture slurry. The anode mixture slurry was applied onto a copper (Cu) thin film having a thickness of 10 µm as an anode current collector, followed by drying. Then, the dried thin film was subjected to roll pressing to manufacture an anode.

Using the manufactured cathode and anode and a separator composed of 3 layers of polypropylene/polyethylene/polypropylene (PP/PE/PP), a pouch-type battery was manufactured according to a conventional method. The electrolyte solutions prepared in Examples 1 to 8, Comparative Examples 1 to 3, and Reference Example 1 were injected into the battery to complete manufacture of a lithium secondary battery.

### Test Examples

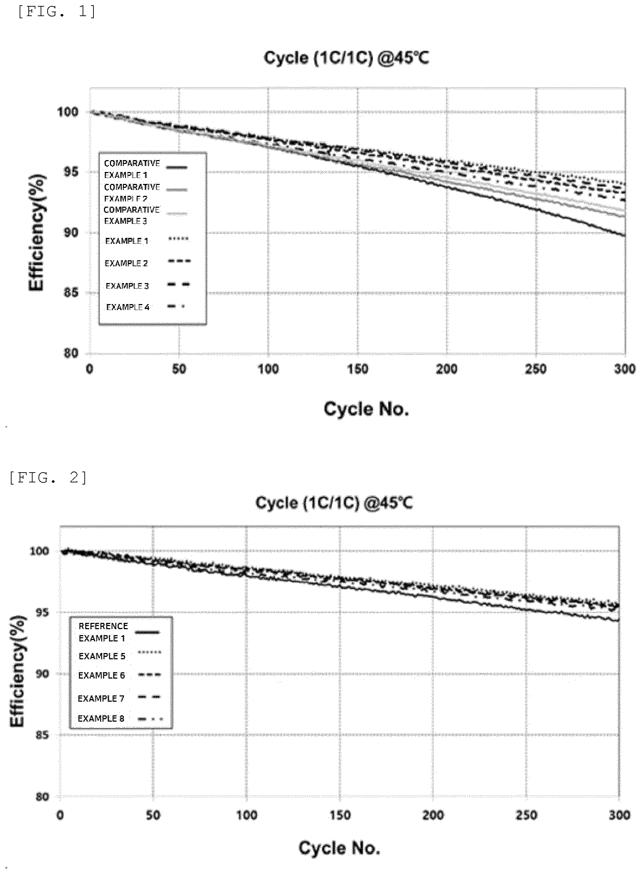

The performance of each manufactured secondary battery was evaluated according to the following methods, and the results are shown in Table 1 and FIGS. 1 and 2 below.

### [Evaluation of HPPC discharge resistance]

HPPC discharge resistance was measured according to the method prescribed in the literature "Battery test manual for plug-in hybrid electric vehicles (2010, Idaho National Laboratory for the U.S. Department of Energy.)".

After being left at 60 °C for 5 hours, a voltage value, a charge/discharge current value corresponding to C-rate, a current change (ΔI), a discharge voltage change (ΔV), a charge voltage change (ΔV), a discharge resistance, and a charge resistance were measured. Then, charge/discharge current for each C-rate was briefly flowed for a certain time, and a resistance value was calculated based on a slope value obtained from current and voltage changes. The measurement results are shown in the initial discharge resistance section in Table 1 below.

After being stored at 60 °C for 30 days, a voltage value at 60 °C, a charge/discharge current value corresponding to C-rate, a current change (ΔI), a discharge voltage change (ΔV), a charge voltage change (ΔV), a discharge resistance, and a charge resistance were measured. Then, charge/discharge current for each C-rate was briefly flowed for a certain time, and a resistance value was calculated based on a slope value obtained from current and voltage changes. The measurement results are shown in the section of the discharge resistance after storage at high temperature in Table 1 below.

DCIR increase rate (%) was calculated by substituting an initial resistance value and a discharge resistance value after storage at high temperature into Equation 1 below.

DCIR increase rate (%) = {(Discharge resistance value after storage at high temperature - Initial resistance) / Initial resistance} × 100

### [Evaluation of high-temperature recovery capacity]

Charging was performed at a constant current of 1.0 C and a voltage of 4.2 V until charge current reached 1/10 C. After charging and discharging were performed by discharging to 3.0 V with a constant current of 1.0 C, (initial) recovery capacity was measured.

After charging was performed under the same charging and discharging conditions, the battery was stored in a constant temperature bath at 60 °C for 4 weeks, and then discharged to a discharge voltage of 3 V at a room temperature of 25 °C. Then, the remaining capacity was measured. Then, the above process was repeated 100 times under the same charge and discharge conditions, recovery capacity was measured, and the average value of recovery capacity was calculated. The results are shown in the section of recovery capacity after storage at high temperature in Table 1.

Recovery capacity retention rate (%) within the corresponding item was calculated by substituting an initially measured recovery capacity value and a recovery capacity value after storage at high temperature into Equation 2 below.

Recovery capacity retention rate (%) = { (Recovery capacity after storage at high temperature - Initial recovery capacity) / Initial recovery capacity} × 100

### [Anode swelling evaluation]

Using a compression-type thickness gauge (Mitutoyo Co.), the pouch cell-type secondary battery was placed between compression plates, and the thickness thereof was measured while the pouch cell was compressed with a weight of 300 g. To exclude the cooling effect, a thickness value measured immediately after removal from an oven set at 60 °C is shown in the initial thickness section of Table 1 below, and a thickness value measured according to the same method after storage for 4 weeks in a constant temperature bath set at 60 °C is shown in the section of the thickness after storage at high temperature of Table 1 below.

The thickness increase rate (%) within the corresponding item was calculated by substituting an initially measured thickness value and a thickness value after storage at high temperature into Equation 3 below. Thickness increase rate (%) = {(Thickness after storage at high temperature - Initial thickness) / Initial thickness} × 100

### [Evaluation high-temperature lifespan]

The secondary battery was charged with constant current at 60 °C at a current of 1 C rate until voltage reaches 4.20 V (vs. Li), followed by a cut-off at a current of 0.05 C rate while maintaining 4.20 V in a constant voltage mode. Subsequently, discharge was performed with a constant current of 1 C rate until voltage reached 3.0 V (vs. Li) (1st cycle). The cycle was repeated 300 times, and the average value of the obtained values was calculated. The results are shown in FIGS. 1 and 2 below.

**[Table 1]**

| Classification | Initial discharge resistance (Initial DCIR, mΩ) | Discharge resistance after storage at high temperat ure (DCIR after 30 days, mΩ) | DCIR increase rate (Equation 1, %) | Recovery capacity (mAh) & recovery capacity retention rate (Equatio n 2, %) after storage at high temperature | Initial thickness (mm) | Thickness (mm) & thickness increase rate (Equation 3, %) after storage at high temperature |
|---|---|---|---|---|---|---|
| Example 1 | 32.1 | 38.6 | 20.3 | 785.6(98 .2) | 3.04 | 3.13 (3.0) |
| Example 2 | 33.4 | 41.5 | 24.3 | 780.5 (97 .6) | 3.03 | 3.16 (4.3) |
| Example 3 | 32.7 | 38.9 | 18.9 | 781.8(97 .7) | 3.05 | 3.16 (3.6) |
| Example 4 | 33.6 | 42.1 | 25.3 | 774.8 (96 .9) | 3.05 | 3.23 (5.9) |
| Example 5 | 32.8 | 40.5 | 23.5 | 790.0(98 .8) | 3.04 | 3.14 (3.3) |
| Example 6 | 32.6 | 40.7 | 24.8 | 789.7 (98 .7) | 3.04 | 3.13 (3.0) |
| Example 7 | 32.7 | 41.2 | 26.0 | 788.4 (98 .6) | 3.05 | 3.15 (3.3) |
| Example 8 | 32.8 | 41.4 | 26.2 | 786.1(98 .3) | 3.04 | 3.16 (3.9) |
| Comparative Example 1 | 36.3 | 45.9 | 26.4 | 767.5(95 .9) | 3.05 | 3.41 (11.8) |
| Comparative Example 2 | 34.6 | 44.5 | 28.6 | 765.8(95 .7) | 3.04 | 3.33 (9.5) |
| Comparative Example 3 | 34.3 | 43.1 | 25.7 | 771.2 (96 .4) | 3.05 | 3.28 (7.5) |
| Reference Example 1 | 34.2 | 42.7 | 24.9 | 789.5 (98 .7) | 3.04 | 3.18 (4.6) |

As shown in Table 1, in the case of Examples 1 to 8 including the compound represented by Chemical Formula 1 according to the present invention, compared to Comparative Examples 1 to 3 and Reference Example 1 not including the compound represented by Chemical Formula 1, all items of initial resistance, resistance after storage at high temperature, DCIR increase rate, recovery capacity and recovery capacity retention rate after storage at high temperature, initial thickness, and thickness and thickness increase rate after storage at high temperature were improved. In particular, in the case of Examples 2 and 4 in which the compound was used in an amount exceeding the appropriate range, compared to Examples 1 and 3 in which the compound was used in a relatively small amount, the effect of low resistance and gas reduction was increased.

In addition, when the performance improver was included, even in the case of Examples 5 to 7 in which the performance improver was used in very small amounts, the effect of low resistance and gas reduction was significant.

In addition, as shown in FIG. 1 below, in the energy capacity measured after 300 cycles of charging and discharging, Examples 1 to 4 showed a clear improvement compared to Comparative Examples 1 to 3.

In addition, as shown in FIG. 2 below, in the energy capacity measured after 300 cycles of charging and discharging, Examples 5 to 8 showed a clear improvement compared to Reference Example 1.

Therefore, when the electrolyte solution additive of the present invention and the electrolyte solution including the same are applied to a secondary battery, the discharge resistance, output, recovery capacity, and lifespan efficiency of the secondary battery may be improved. Due to these characteristics, the secondary battery according to the present invention is suitable for use as a secondary battery for energy storage systems (ESSs) and automobiles.

## Claims

1. An electrolyte solution for batteries, comprising a compound represented by Chemical Formula 1 below. 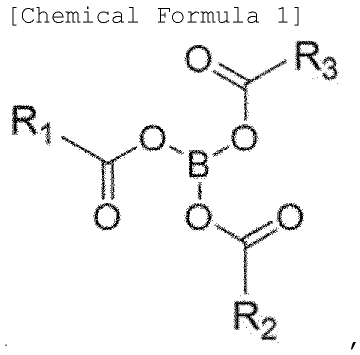 wherein R₁, R₂, and R₃ are each independently a straight-chain or branched alkyl group comprising a halogen substituent having 1 to 7 carbon atoms.

2. The electrolyte solution according to claim 1, wherein, in the compound represented by Chemical Formula 1, the halogen substituent is fluorine.

3. The electrolyte solution according to claim 1, wherein, based on 100 % by weight in total of the electrolyte solution, the compound represented by Chemical Formula 1 is comprised in an amount of 0.1 to 10 % by weight.

4. The electrolyte solution according to claim 1, wherein, based on 100 % by weight in total of the electrolyte solution, the electrolyte solution further comprises an organic sulfur compound in an amount of 1.5 % by weight or less.

5. The electrolyte solution according to claim 4, wherein the organic sulfur compound is a sulfate compound, a sultone compound, or a mixture thereof.

6. The electrolyte solution according to claim 5, wherein the sulfate compound comprises one or more selected from ethylene sulfate and 1,3-propylene sulfate, and the sultone compound comprises one or more selected from 1,3-propane sultone and 3-fluoro-1,3-propane sultone.

7. The electrolyte solution according to claim 5, wherein the mixture comprises the sulfate compound and the sultone compound in a weight ratio of 1:0.5 to 1.5 (sulfate compound:sultone compound).

8. The electrolyte solution according to claim 4, wherein, based on 100 % by weight in total of the electrolyte solution, the organic sulfur compound for batteries further comprises one or more selected from the group consisting of vinylene carbonate (VC), fluoroethylene carbonate (FEC), and difluoroethylene carbonate in an amount of 0.3 to 10 % by weight.

9. The electrolyte solution according to claim 1, wherein the electrolyte solution comprises one or more organic solvents selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

10. The electrolyte solution according to claim 1, wherein the electrolyte solution comprises one or more lithium salts selected from the group consisting of LiPF₆, LiBF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, and (CF₃SO₂)₂NLi.

11. An electrolyte solution additive, comprising a compound represented by Chemical Formula 1 below. 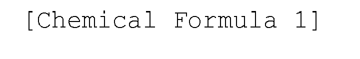 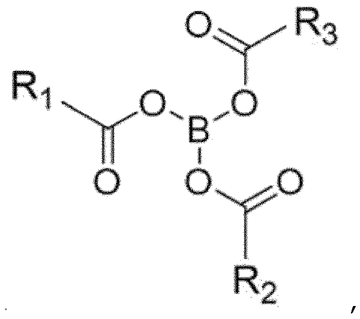 wherein R₁, R₂, and R₃ are each independently a straight-chain or branched alkyl group comprising a halogen substituent having 1 to 7 carbon atoms.

12. A lithium secondary battery, comprising an anode, a cathode, a separator disposed between the anode and the cathode, and an electrolyte solution,
wherein the electrolyte solution is the electrolyte solution according to any one of claims 1 to 10.

13. The lithium secondary battery according to claim 12, wherein the lithium secondary battery has a discharge resistance value of 42.1 mQ or less as measured at 60 °C.

14. The lithium secondary battery according to claim 12, wherein the lithium secondary battery has a recovery capacity retention rate of 96.9 % or more as measured at 60 °C and calculated by Equation 2 below. Recovery capacity retention rate (%) = {(Recovery capacity after storage at high temperature - Initial recovery capacity) / Initial recovery capacity} × 100

15. The lithium secondary battery according to claim 12, wherein the lithium secondary battery has a thickness increase rate of 5.9 % or less as measured at 60 °C and calculated by Equation 3 below. Thickness increase rate (%) = {(Thickness after storage at high temperature - Initial thickness) / Initial thickness} × 100

16. The lithium secondary battery according to claim 12, wherein the lithium secondary battery is a battery for energy storage systems (ESSs) and automobiles.
